# EUROPEAN PATENT SPECIFICATION

(11) **EP 4 265 970 B1**
(45) Date of publication and mention of the grant of the patent: **18.06.2025**
(21) Application number: 21924250.0
(22) Date of filing: 15.10.2021
(51) Int. Cl.: F24F 1/32, F24F 1/34, H02G 3/04, F16L 11/127

(54) **AIR CONDITIONING PIPELINE AND AIR CONDITIONER**
KLIMAANLAGENLEITUNG UND KLIMAANLAGE
CONDUITE DE CLIMATISATION ET APPAREIL DE CLIMATISATION

(30) Priority: 03.02.2021 CN 202110149337
(43) Date of publication of application: 25.10.2023
(73) Proprietor: Gree Electric Appliances, Inc. of Zhuhai, Zhuhai, Guangdong 519070 (CN)
(72) Inventor: WANG, Jing, Guangdong 519070 (CN); HUANG, Meng, Guangdong 519070 (CN)
(74) Representative: Reddie & Grose LLP
(86) International application number: PCT/CN2021/124180
(87) International publication number: WO 2022/166253

(56) References cited:
- CN-A- 102 589 052
- CN-A- 102 767 922
- CN-A- 106 335 250
- CN-A- 111 884 682
- CN-A- 112 747 386
- CN-A- 112 747 387
- CN-A- 112 747 388
- CN-B- 101 281 801
- CN-U- 210 107 661
- DE-A1- 102010 034 066
- DE-T2- 69 521 460
- KR-A- 20060 011 137
- KR-A- 20120 055 151
- KR-B1- 101 279 074

## Description

### Technical Field

The present invention relates to the field of air conditioner, and in particular, to an air conditioner pipeline and an air conditioner.

### Background

An indoor unit and an outdoor unit of a split air conditioner are separated. A copper pipe is used for refrigerant transmission, and a conducting wire is used for power supply and communication. Two different work requirements of pipe connection and wiring increase the complexity of tools and skills. If the copper pipe and a cable are wound together and a protective layer such as sponge is added to an outer layer, a diameter of a pipeline is large and inconvenient to install, and the use of the cable will cause great waste.

DE102010034066A1 discloses a conduit having an airline formed by an oval or rectangular sectional shaped hollow section e.g. stared hollow section and flexible hollow section. Current and/or data lines e.g. power lines, electrical data lines and optical data lines, are integrated at a wall in the section. The current and/or the data lines are arranged in a cavity of the section. A coupling device is provided at a forehead end of the conduit and provides mechanical linkage between the section and a line connection that connects the current and/or data lines with the section. The electrical data lines are formed as multi-core cables and coaxial cables. The optical data lines are formed as optical fiber cables.

DE69521460 discloses portable air-conditioning equipment for living areas.

KR20060011137 discloses an insulating material and piping for cooling, heating, and air conditioning equipment using the same. A refrigerant cycle of the air conditioning equipment for cooling and heating is connected, and the low-pressure refrigerant pipe through which the refrigerant evaporated in the gas phase is transported, and the diameter is relatively smaller than the low-pressure refrigerant pipe and condensed into the liquid phase. In the insulation material covering the high-pressure refrigerant pipe through which the refrigerant is transferred, the first insertion hole into which the low-pressure refrigerant pipe is inserted and the high-pressure refrigerant pipe are inserted, and the first insertion hole into which the low-pressure refrigerant pipe is inserted is inserted. A second insertion hole having a smaller diameter than the first insertion hole is formed, and a concave portion that is located between the first and second insertion holes and is concave inward is formed on the outer peripheral surface. An insulating material characterized in that it is formed in parallel with the first and second insertion holes and a piping for a cooling, heating and air conditioning device using the same are provided.
KR101279074 discloses a method of manufacturing piping materials for air conditioners. The refrigerant pipe in which the supply refrigerant pipe or the recovery refrigerant pipe is located is formed in the center of the insulating material during foam molding of the pair of insulating materials, and the long groove formed in the insulating material during foam molding is formed in the pair of insulating materials.

### Summary

The present invention as defined in claim 1 provides an air conditioner pipeline, including a pipe body, wherein a flow channel for a refrigerant to flow is formed by an inner side of a pipe wall of the pipe body; the pipe wall of the pipe body is provided with at least two conductive parts and insulating parts; the conductive parts are configured to transmit power to the air conditioner; and the insulating parts are configured to realize insulation between the conductive parts.

In some embodiments, the air conditioner pipeline further includes a partition plate arranged on the inner side of the pipe wall of the pipe body and configured to at least partition the flow channel for the refrigerant to flow into a first flow channel and a second flow channel, wherein the first flow channel is configured to convey a liquid refrigerant, and the second flow channel is configured to convey a gaseous refrigerant.

According to the invention, the conductive parts are made of metal conductive materials, and the conductive parts are configured as power transmission lines.

In some embodiments, the at least two conductive parts include a first conductive part and a second conductive part which surround a central axis of the pipe body at intervals; the insulating parts are arranged between the first conductive part and the second conductive part; the first conductive part and the second conductive part are made of metal conductive materials; and the first conductive part is configured as a live wire, and the second conductive part is configured as a neutral wire.

In some embodiments, the pipe wall of the pipe body is provided with a communication part; the communication part and the conductive parts surround the central axis of the pipe body at intervals; the insulating parts are further configured to realize insulation between the communication part and the conductive parts; and the communication part is configured as a communication transmission line to transmit a communication signal to the air conditioner.

In some embodiments, the communication part is made of a metal conductive material, and the communication part is configured as a communication transmission line.

In some embodiments, the conductive parts include the first conductive part and the second conductive part; the pipe wall of the pipe body is further provided with the communication part; the insulating parts include a first insulating part, a second insulating part and a third insulating part; the first insulating part is arranged between the first conductive part and the second conductive part; the second insulating part is arranged between the first conductive part and the communication part; and the third insulating part is arranged between the second conductive part and the communication part.

In some embodiments, the conductive parts are integrally extruded by the metal conductive materials, and the insulating parts are integrally extruded by insulating materials.

In some embodiments, materials of the conductive parts include copper.

In some embodiments, length extending directions of the conductive parts and the insulating parts are consistent with a length extending direction of the pipe body.

Some embodiments of the present invention provide an air conditioner, including the above air conditioner pipeline.

Based on the above technical solution, the present invention at least has the following beneficial effects:

according to the invention, the inner side of the pipe wall of the pipe body is used for refrigerant transmission, the pipe wall of the pipe body is provided with the conductive parts, the conductive parts are configured to transmit power, and one air conditioner pipeline can transmit refrigerants and also can transmit power, thereby saving the connection cost of an indoor unit and an outdoor unit of the air conditioner, reducing the installation complexity of the air conditioner, achieving high safety and facilitating implementation.

### Brief Description of the Drawings

The accompanying drawings described herein are used to provide further understanding of the present invention and constitute a part of the present disclosure. The schematic embodiments of the present invention and the description thereof are used to explain the present invention. In the drawings:

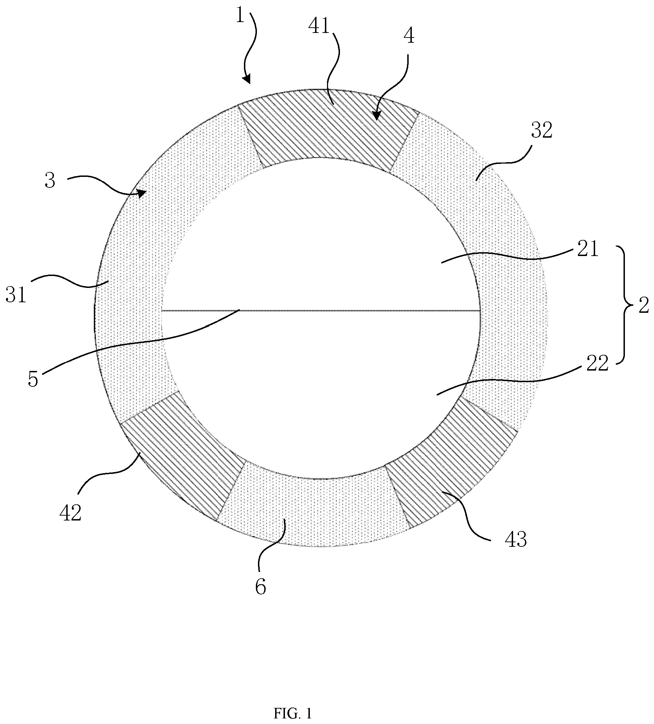

FIG. 1 is a cross-section schematic diagram of an air conditioner pipeline according to some embodiments of the present invention.

### Detailed Description of the Embodiments

The technical solutions in the embodiments will be described clearly and completely with reference to the accompanying drawings in the embodiments of the present invention. Apparently, the described embodiments are merely a portion rather than all of the embodiments of the present invention. All other embodiments which are within the scope of the invention as defined in the appended claims shall be included in the protection scope of the present invention.

In the description of the present disclosure, it should be understood that an azimuth or position relationship indicated by terms "center", "longitudinal", "transverse", "front", "rear", "left", "right", "vertical", "horizontal", "top", "bottom", "inner", "outer" and the like is an azimuth or position relationship based on the accompanying draws, which is only for facilitating description of the present disclosure and simplifying description, but not indicates or implies that the referred device or component must have a specific azimuth and perform construction and operation in the specific azimuth; therefore, it cannot be interpreted as a limitation to the protection scope of the present invention.

The embodiments of the present disclosure provide respectively an air conditioner pipeline and an air conditioner, thereby alleviating the problem of complicated installation of the air conditioner pipeline.

As shown in FIG. 1, some embodiments provide an air conditioner pipeline, including a pipe body 1, wherein a flow channel 2 for a refrigerant to flow is formed by an inner side of a pipe wall of the pipe body 1; the pipe wall of the pipe body 1 is provided with at least two conductive parts 3 and at least two insulating parts 4; the conductive parts 3 are configured to transmit power to the air conditioner; and the insulating parts 4 are configured to realize insulation between the conductive parts 3.

Length extending directions of the conductive parts 3 are consistent with a length extending direction of the pipe body 1. The insulating parts 4 are configured to realize insulation between the conductive parts 3. The insulating parts 4 are further configured to realize insulation at the periphery of the conductive parts 3. Optionally, length extending directions of the insulating parts 4 are consistent with the length extending direction of the pipe body 1.

According to the invention, the inner side of the pipe wall of the pipe body 1 is used for refrigerant transmission, the pipe wall of the pipe body 1 is provided with conductive parts 3, the conductive parts 3 are configured to transmit power, and one air conditioner pipeline can transmit refrigerants and also can transmit power, thereby saving the connection cost of an indoor unit and an outdoor unit of the air conditioner, reducing the installation complexity of the air conditioner, achieving high safety and facilitating implementation.

The flow channel 2 in the inner side of the pipe wall of the pipe body 1 refers to an axial channel in the inner side of the annular pipe wall of the pipe body 1. The conductive parts 3 are arranged on a pipe wall body of the pipe body 1.

In some embodiments, the air conditioner pipeline further includes a partition plate 5 arranged on the inner side of the pipe wall of the pipe body 1 and configured to at least partition the flow channel 2 into a first flow channel 21 and a second flow channel 22, where the first flow channel 21 is configured to convey a liquid refrigerant, and the second flow channel 22 is configured to convey a gaseous refrigerant.

The partition plate 5 is made of a material with strong heat-insulating performance and divides the flow channel 2 into the first flow channel 21 and the second flow channel 22; the first flow channel 21 is configured to transmit a compressed liquid refrigerant; the second flow channel 22 is configured to transmit a gaseous refrigerant; and the gaseous refrigerant and the liquid refrigerant can be transmitted in one air conditioner pipeline, and two pipelines such as a gas pipe and a liquid pipe are not required, so that the engineering construction difficulty and the engineering construction investment are reduced.

According to the invention, the conductive parts 3 are made of metal conductive materials, and the conductive parts 3 are configured as power transmission lines. The pipe wall of the pipe body 1 directly forms the conductive parts 3 as power transmission lines, thereby saving a large number of engineering cable costs, simplifying engineering construction and reducing construction cost.

The conductive parts 3 are made of metal conductive materials such as copper. During actual use, refrigerant transmission and electricity conducting functions can be implemented by directly using one pipeline that is made of the metal conductive materials and the insulating materials and is provided with the conductive parts 3 and the insulating parts 4, so that the engineering installation cost is saved. Power supply is realized through the pipe wall of the pipe body 1, so that direct-current power supply and alternating-current power supply can be realized.

Optionally, insulating layers are arranged on the inner side of each of the conductive parts 3, that is, one side adjacent to the interior of the pipe body 1, and the outer side of each of the conductive parts 3, that is, one side away from the interior of the pipe body 1. The adjacent conductive parts 3 are isolated through the insulating parts 4.

Or the refrigerant in the pipe body 1 adopts a refrigerant with insulativity, and the insulating layer is arranged on the outer side of each of the conductive parts 3, that is, one side away from the interior of the pipe body 1; and the insulating layer is not required to be arranged on the inner side of each of the conductive parts 3, that is, one side adjacent to the interior of the pipe body 1. Or the inner side of the pipe wall of the pipe body 1 is made of the metal conductive material, the pipe wall of the pipe body 1 is provided with at least two conductive parts 3 surrounding the central axis of the pipe body 1 at intervals, and the insulating parts 4 are arranged between the adjacent conductive parts 3.

In some embodiments, the conductive parts 3 include a first conductive part 31 and a second conductive part 32 surrounding a central axis of the pipe body 1 at intervals, an insulating part 4 is arranged between the first conductive part 31 and the second conductive part 32, the first conductive part 31 and the second conductive part 32 are made of metal conductive materials; and the first conductive part 31 is configured as a live wire, and the second conductive part 32 is configured as a neutral wire.

In some embodiments, the pipe wall of the pipe body 1 is further provided with a communication part 6, the communication part 6 and the conductive parts 3 surround the central axis of the pipe body 1 at intervals, insulating parts 4 are arranged between the communication part 6 and the conductive parts 3, the insulating parts 4 are further configured to realize insulation between the communication part 6 and the conductive parts 3, and the communication part 6 is configured to transmit a communication signal to the air conditioner.

A length extending direction of the communication part 6 is consistent with a length extending direction of the pipe body 1, and the insulating parts 4 are configured to realize insulation of the communication part 6.

By an air conditioner pipeline multiplexing technology, one air conditioner pipeline can transmit a refrigerant and also can transmit power and communication information, so that the connection cost of an indoor unit and an outdoor unit of the air conditioner is saved, the manufacturing process is simple and convenient, the cost is low, and implementation is facilitated.

In some embodiments, the communication part 6 is made of a metal conductive material, and the communication part 6 is configured as a communication transmission line to transmit a communication signal to the air conditioner. The pipe wall of the pipe body 1 directly forms a communication transmission line, thereby saving a large number of engineering cable costs, simplifying engineering construction and reducing construction cost.

In some embodiments, as shown in FIG. 1, in the cross-section schematic diagram of the air conditioner pipeline, the conductive parts 3 include a first conductive part 31 and a second conductive part 32, the pipe wall of the pipe body 1 is further provided with a communication part 6, the insulating parts 4 include a first insulating part 41, a second insulating part 42 and a third insulating part 43, the first insulating part 41 is arranged between the first conductive part 31 and the second conductive part 32, the second insulating part 42 is arranged between the first conductive part 31 and the communication part 6, and the third insulating part 43 is arranged between the second conductive part 32 and the communication part 6.

The annular pipe wall of the pipe body 1 is electrically isolated by three insulating parts such as the first insulating part 41, the second insulating part 42 and the third insulating part 43 to form two mutually isolated conductive parts 3 and one communication part 6. The first conductive part 31 and the second conductive part 32 are made of metal conductive materials and serve as power transmission lines to realize the power transmission of the air conditioner. For example: the first conductive part 31 and the second conductive part 32 can be used as a live wire and a neutral wire for alternating-current power supply, and also can realize high and low-voltage direct-current power supply. The communication part 6 is made of a metal conductive material and serves as a communication line for communicating with the air conditioner.

Optionally, the communication part 6 cooperates with the second conductive part 32 to realize the information transmission of communication. That is, the communication part 6 and the first conductive part 31 share the second conductive part 32.

Of course, the pipe wall of the pipe body 1 of the air conditioner pipeline is not limited to being provided with one communication part 6, two conductive parts 3 and three insulating parts 4, and three, four, five or more conductive parts 3, or two, three or more communication parts 6 may be provided according to requirements. Insulation between the conductive parts 3, between the communication parts 6, and between the conductive part 3 and the communication part 6 formed by the pipe wall of the pipe body 1 is realized through the insulating parts 4.

In some embodiments, the conductive parts 3 are integrally extruded by metal conductive materials, the insulating parts 4 are integrally extruded by insulating materials, and a flow channel for a refrigerant to flow and an electric lead may be directly formed by an integrated extrusion forming process, thereby facilitating the implementation of the structure.

In some embodiments, materials of the conductive parts 3 may be metal conductive materials such as copper.

Some embodiments provide an air conditioner, including the above air conditioner pipeline.

Optionally, the air conditioner pipeline serves as a connecting pipeline between an indoor unit and an outdoor unit of the air conditioner.

In the engineering installation process of the air conditioner, one air conditioner pipeline can be used to realize refrigerant transmission and realize power supply and/or communication. It is unnecessary to bind pipelines and cables together for engineering installation, so that the construction complexity is greatly simplified, and the engineering cost is saved.

Furthermore, the conductive parts and/or the communication part of the air conditioner pipeline are made of metal conductive materials and may directly serve as electric leads and/or communication lines, thereby saving a large number of engineering cable costs, simplifying engineering construction and reducing construction cost.

Based on the embodiments of the present invention, the technical features of one of the embodiments can be beneficially combined with one or more of other embodiments without departing from the scope of protection as defined in the claims.

In the description of the present invention, it should be understood that the words "first", "second", "third" and the like for limiting parts are merely for convenience of distinguishing the parts. Unless otherwise stated, the above words do not have special meanings and cannot be construed as limitations to the protection scope of the present invention.

Finally, it should be noted that the above embodiments are merely intended to describe the technical solutions of the present invention and are not to limit them. Although the present invention has been described in detail with reference to the preferred embodiments, those of ordinary skill in the art should understand that modification can be made on the specific embodiments of the present invention, as long as within the scope of protection defined in the appended claims.

## Claims

1. An air conditioner pipeline, comprising a pipe body (1), wherein a flow channel (2) for a refrigerant to flow is formed by an inner side of a pipe wall of the pipe body (1); the pipe wall of the pipe body (1) is provided with at least two conductive parts (3) and insulating parts (4); the conductive parts (3) are configured to transmit power to the air conditioner, and the insulating parts (4) are configured to realize insulation between the conductive parts (3); the conductive parts (3) are made of metal conductive materials, and the conductive parts (3) are configured as power transmission lines, **and** wherein the pipe wall of the pipe body (1) directly forms the conductive parts (3) as power transmission lines.

2. The air conditioner pipeline according to claim 1, further comprising a partition plate (5) arranged on the inner side of the pipe wall of the pipe body (1) and configured to at least partition the flow channel (2) for the refrigerant to flow into a first flow channel (21) and a second flow channel (22), wherein the first flow channel (21) is configured to convey a liquid refrigerant, and the second flow channel (22) is configured to convey a gaseous refrigerant.

3. The air conditioner pipeline according to claim 1 or 2, wherein the at least two conductive parts (3) comprise a first conductive part (31) and a second conductive part (32) which surround a central axis of the pipe body (1) at intervals; the insulating parts (4) are arranged between the first conductive part (31) and the second conductive part (32); the first conductive part (31) and the second conductive part (32) are made of metal conductive materials; and the first conductive part (31) is configured as a live wire, and the second conductive part (32) is configured as a neutral wire.

4. The air conditioner pipeline according to any one of claims 1 to 3, wherein the pipe wall of the pipe body (1) is provided with a communication part (6); the communication part (6) and the conductive parts (3) surround the central axis of the pipe body (1) at intervals; the insulating parts (4) are further configured to realize insulation between the communication part (6) and the conductive parts (3); and the communication part (6) is configured as a communication transmission line to transmit a communication signal to the air conditioner.

5. The air conditioner pipeline according to claim 4, wherein the communication part (6) is made of a metal conductive material, and the communication part (6) is configured as a communication transmission line.

6. The air conditioner pipeline according to any one of claims 1 to 5, wherein the conductive parts (3) comprise the first conductive part (31) and the second conductive part (32); the pipe wall of the pipe body (1) is further provided with the communication part (6); the insulating parts (4) comprise a first insulating part (41), a second insulating part (42) and a third insulating part (43); the first insulating part (41) is arranged between the first conductive part (31) and the second conductive part (32); the second insulating part (42) is arranged between the first conductive part (31) and the communication part (6); and the third insulating part (43) is arranged between the second conductive part (32) and the communication part (6).

7. The air conditioner pipeline according to any one of claims 1 to 6, wherein the conductive parts (3) are integrally extruded by the metal conductive materials, and the insulating parts (4) are integrally extruded by insulating materials.

8. The air conditioner pipeline according to claim 7, wherein materials of the conductive parts (3) comprise copper.

9. The air conditioner pipeline according to any one of claims 1 to 8, wherein length extending directions of the conductive parts (3) and the insulating parts (4) are consistent with a length extending direction of the pipe body (1).

10. An air conditioner, comprising the air conditioner pipeline according to any one of claims 1 to 9.

## Patentansprüche

1. Klimaanlagenrohrleitung, die einen Rohrkörper (1) umfasst, wobei ein Strömungskanal (2) für den Fluss von Kältemittel durch eine Innenseite einer Rohrwand des Rohrkörpers (1) gebildet ist; die Rohrwand des Rohrkörpers (1) mit mindestens zwei leitfähigen Teilen (3) und isolierenden Teilen (4) versehen ist; die leitfähigen Teile (3) zum Übertragen von Strom zur Klimaanlage konfiguriert sind, und die isolierenden Teile (4) zum Erzielen einer Isolierung zwischen den leitfähigen Teilen (3) konfiguriert sind;
die leitfähigen Teile (3) aus metallischen leitfähigen Materialien bestehen und die leitfähigen Teile (3) als Stromübertragungsleitungen konfiguriert sind, und wobei die Rohrwand des Rohrkörpers (1) die leitfähigen Teile (3) direkt als Stromübertragungsleitungen bildet.

2. Klimaanlagenrohrleitung nach Anspruch 1, die ferner eine Trennplatte (5) umfasst, die an der Innenseite der Rohrwand des Rohrkörpers (1) angeordnet und zum Unterteilen des Strömungskanals (2) für den Fluss von Kältemittel zumindest in einen ersten Strömungskanal (21) und einen zweiten Strömungskanal (22) konfiguriert ist, wobei der erste Strömungskanal (21) zum Fördern eines flüssigen Kältemittels und der zweite Strömungskanal (22) zum Fördern eines gasförmigen Kältemittels konfiguriert ist.

3. Klimaanlagenrohrleitung nach Anspruch 1 oder 2, wobei die mindestens zwei leitfähigen Teile (3) einen ersten leitfähigen Teil (31) und einen zweiten leitfähigen Teil (32) umfassen, die in Abständen eine Mittelachse des Rohrkörpers (1) umgeben; die isolierenden Teile (4) zwischen dem ersten leitfähigen Teil (31) und dem zweiten leitfähigen Teil (32) angeordnet sind; der erste leitfähige Teil (31) und der zweite leitfähige Teil (32) aus metallischen leitfähigen Materialien bestehen; und der erste leitfähige Teil (31) als stromführender Leiter und der zweite leitfähige Teil (32) als neutraler Leiter konfiguriert sind.

4. Klimaanlagenrohrleitung nach einem der Ansprüche 1 bis 3,
wobei die Rohrwand des Rohrkörpers (1) mit einem Kommunikationsteil (6) versehen ist; der Kommunikationsteil (6) und die leitfähigen Teile (3) die Mittelachse des Rohrkörpers (1) in Abständen umgeben; die isolierenden Teile (4) ferner zum Erzielen einer Isolierung zwischen dem Kommunikationsteil (6) und den leitfähigen Teilen (3) konfiguriert sind; und der Kommunikationsteil (6) als Kommunikationsübertragungsleitung zum Übertragen eines Kommunikationssignals zur Klimaanlage konfiguriert ist.

5. Klimaanlagenrohrleitung nach Anspruch 4, wobei der Kommunikationsteil (6) aus einem metallischen leitfähigen Material besteht und der Kommunikationsteil (6) als Kommunikationsübertragungsleitung konfiguriert ist.

6. Klimaanlagenrohrleitung nach einem der Ansprüche 1 bis 5,
wobei die leitfähigen Teile (3) den ersten leitfähigen Teil (31) und den zweiten leitfähigen Teil (32) umfassen; die Rohrwand des Rohrkörpers (1) ferner mit dem Kommunikationsteil (6) versehen ist; die isolierenden Teile (4) einen ersten isolierenden Teil (41), einen zweiten isolierenden Teil (42) und einen dritten isolierenden Teil (43) umfassen; der erste isolierende Teil (41) zwischen dem ersten leitfähigen Teil (31) und dem zweiten leitfähigen Teil (32) angeordnet ist; der zweite isolierende Teil (42) zwischen dem ersten leitfähigen Teil (31) und dem Kommunikationsteil (6) angeordnet ist; und der dritte isolierende Teil (43) zwischen dem zweiten leitfähigen Teil (32) und dem Kommunikationsteil (6) angeordnet ist.

7. Klimaanlagenrohrleitung nach einem der Ansprüche 1 bis 6,
wobei die leitfähigen Teile (3) einstückig aus den metallischen leitfähigen Materialien extrudiert sind und die isolierenden Teile (4) einstückig aus isolierenden Materialien extrudiert sind.

8. Klimaanlagenrohrleitung nach Anspruch 7,
wobei die Materialien der leitfähigen Teile (3) Kupfer umfassen.

9. Klimaanlagenrohrleitung nach einem der Ansprüche 1 bis 8,
wobei Längsrichtungen der leitfähigen Teile (3) und der isolierenden Teile (4) mit einer Längsrichtung des Rohrkörpers (1) übereinstimmen.

10. Klimaanlage, die die Klimaanlagenrohrleitung nach einem der Ansprüche 1 bis 9 umfasst.

## Revendications

1. Conduite de climatiseur, comprenant un corps de conduite (1), dans laquelle un canal d'écoulement (2) pour l'écoulement d'un réfrigérant est formé par un côté intérieur d'une paroi de conduite du corps de conduite (1) ; la paroi de conduite du corps de conduite (1) est pourvue d'au moins deux parties conductrices (3) et de parties isolantes (4) ; les parties conductrices (3) sont configurées pour transmettre une puissance au climatiseur ; et les parties isolantes (4) sont configurées pour réaliser une isolation entre les parties conductrices (3) ; les parties conductrices (3) sont constituées de matériaux conducteurs métalliques, et les parties conductrices (3) sont configurées en tant que lignes de transmission de puissance, et dans laquelle la paroi de conduite du corps de conduite (1) forme directement les pièces conductrices (3) en tant que lignes de transmission de puissance.

2. Conduite de climatiseur selon la revendication 1, comprenant en outre une plaque de séparation (5) disposée sur le côté intérieur de la paroi de conduite du corps de conduite (1) et configurée pour au moins diviser le canal d'écoulement (2) pour que le réfrigérant s'écoule dans un premier canal d'écoulement (21) et un second canal d'écoulement (22), dans lequel le premier canal d'écoulement (21) est configuré pour convoyer un réfrigérant liquide, et le second canal d'écoulement (22) est configuré pour convoyer un réfrigérant gazeux.

3. Conduite de climatiseur selon la revendication 1 ou 2, dans laquelle les au moins deux parties conductrices (3) comprennent une première partie conductrice (31) et une deuxième partie conductrice (32) qui entourent un axe central du corps de conduite (1) suivant des intervalles; les parties isolantes (4) sont disposées entre la première partie conductrice (31) et la deuxième partie conductrice (32) ; la première partie conductrice (31) et la deuxième partie conductrice (32) sont constituées de matériaux conducteurs métalliques ; et la première partie conductrice (31) est configurée en tant que fil sous tension, et la deuxième partie conductrice (32) est configurée en tant que fil neutre.

4. Conduite de climatiseur selon l'une quelconque des revendications 1 à 3, dans laquelle la paroi de conduite du corps de conduite (1) est pourvue d'une partie de communication (6) ; la partie de communication (6) et les parties conductrices (3) entourent l'axe central du corps de conduite (1) suivant des intervalles ; les parties isolantes (4) sont configurées en outre pour réaliser une isolation entre la partie de communication (6) et les parties conductrices (3) ; et la partie de communication (6) est configurée en tant que ligne de transmission de communication pour transmettre un signal de communication au climatiseur.

5. Conduite de climatiseur selon la revendication 4, dans laquelle la partie de communication (6) est constituée d'un matériau conducteur métallique, et la partie de communication (6) est configurée en tant que ligne de transmission de communication.

6. Conduite de climatiseur selon l'une quelconque des revendications 1 à 5, dans laquelle les parties conductrices (3) comprennent la première partie conductrice (31) et la deuxième partie conductrice (32) ; la paroi de conduite du corps de conduite (1) est pourvue en outre de la partie de communication (6) ; les parties isolantes (4) comprennent une première partie isolante (41), une deuxième partie isolante (42) et une troisième partie isolante (43) ; la première partie isolante (41) est disposée entre la première partie conductrice (31) et la deuxième partie conductrice (32) ; la deuxième partie isolante (42) est disposée entre la première partie conductrice (31) et la partie de communication (6) ; et la troisième partie isolante (43) est disposée entre la deuxième partie conductrice (32) et la partie de communication (6).

7. Conduite de climatiseur selon l'une quelconque des revendications 1 à 6, dans laquelle les parties conductrices (3) sont intégralement extrudées par les matériaux conducteurs métalliques, et les pièces isolantes (4) sont intégralement extrudées par des matériaux isolants.

8. Conduite de climatiseur selon la revendication 7, dans laquelle les matériaux des parties conductrices (3) comprennent du cuivre.

9. Conduite de climatiseur selon l'une quelconque des revendications 1 à 8, dans laquelle les sens d'extension en longueur des parties conductrices (3) et des parties isolantes (4) sont cohérents avec un sens d'extension en longueur du corps de conduite (1).

10. Climatiseur, comprenant la conduite de climatiseur selon l'une quelconque des revendications 1 à 9.
